Europäisches Patentamt

European Patent Office

Office européen des brevets

(19)

(11) Veröffentlichungsnummer: 0 077 540
A1

(12) **EUROPÄISCHE PATENTANMELDUNG**

(21) Anmeldenummer: 82109550.2

(22) Anmeldetag: 15.10.82

(51) Int. Cl.³: C 10 L 5/40
B 02 C 19/18

(30) Priorität: 16.10.81 DE 3141085

(43) Veröffentlichungstag der Anmeldung:
27.04.83 Patentblatt 83/17

(84) Benannte Vertragsstaaten:
AT BE CH DE FR GB IT LI LU NL SE

(71) Anmelder: MANNESMANN VEBA UMWELTTECHNIK
GMBH
Südstrasse 41
D-4690 Herne 2(DE)

(72) Erfinder: Ulrici, Wolfgang, Dr.
Blücherstrasse 13
D-5300 Bonn(DE)

(72) Erfinder: Liss, Ulrich
Kaltehardtstrasse
D-4630 Bochum(DE)

(72) Erfinder: Augustin, Hans, Dr.
Schützenstrasse 40
D-2057 Reinbek(DE)

(74) Vertreter: Krug, Joachim, Dr.
Möllerstrasse 58
D-4390 Gladbeck(DE)

(54) Verfahren zur Herstellung eines Pulvers aus zellulosereichen Stoffen.

(57) Die Herstellung von Pulvern aus zellulosereichen Stoffen, z. B. von Brennstoffpulver aus Hausmüll oder von Holzpulver in der Spanplattenindustrie, durch Erhitzen auf Temperaturen über 100 °C und Mahlen wird dadurch verbessert, daß das Erhitzen in Gegenwart von Wasserdampf, insbesondere unter dem Druck von Sattdampf von 110 °C bis 180 °C, vorzugsweise von 150 °C erfolgt. Eine schnelle Entspannung des Dampfes bereitet das Material weiter auf die Vermahlung vor. Diese sollte bei etwa gleicher Temperatur wie die Dampfbehandlung vorgenommen werden.

Mannesmann Veba Umwelttechnik GmbH

Verfahren zur Herstellung eines Pulvers
aus zellulosereichen Stoffen

Die Erfindung betrifft ein Verfahren zur Herstellung eines
Pulvers aus zellulosereichen Stoffen, wobei deren Zellulosestruktur zunächst durch Erhitzen auf Temperaturen von
mehr als 100 °C geschwächt wird und die Stoffe anschließend
gemahlen werden. Das Verfahren kann z. B. bei der Herstellung von Brennstoffpulver aus Hausmüll oder bei der Herstellung von Holzpulver in der Spanplattenindustrie angewendet werden.

Bei einem derartigen, aus DE-OS 25 13 767 bekannten Verfahren, das für die Herstellung von Brennstoffpulver aus Hausmüll entwickelt wurde, wird der Mahlenergieaufwand durch
Versprödung der zellulosehaltigen Abfallstoffe mittels
Mineralsäuren, also Salzsäure, Schwefelsäure, Salpetersäure
oder Phosphorsäure, oder deren Vorläufern in flüssigem oder
gasförmigem Zustand niedrig gehalten. Hierbei ergeben sich
jedoch beträchtliche Nachteile:

Durch Schwefel- oder Salzsäure gelangen unerwünschte Schadstoffe in das Pulver, die im Falle der Verbrennung einen erhöhten Aufwand für die Rauchgasreinigung bzw. die Kesselwartung erfordern. Bei Anwendung von Phosphorsäure entstehen im Falle der Verbrennung des Pulvers Phosphate, die den
Ascheschmelzpunkt stark erniedrigen, was zu Schlackenproblemen führt. Schließlich bilden sich bei der Versprödung
mit Salpetersäure leicht nitrose Gase, der Einsatz von Salpetersäure ist daher aus Umwelt- bzw. Arbeitsschutzgründen
nicht zu empfehlen.

Die Erfindung bezweckt, den Mahlenergieaufwand ohne die genannten Nachteile zu reduzieren. Zur Lösung dieser Aufgabe
sieht die Erfindung vor, die Erhitzung der zellulosereichen
Stoffe in Gegenwart von Wasserdampf vorzunehmen. Wie in Versuchen nachgewiesen wurde, führt diese Behandlung zu einer derartigen Schwächung der Zellulosestruktur, daß das nachfolgende Mahlen beträchtlich erleichtert wird.

Eine zusätzliche Verringerung des Mahlenergieaufwandes wird durch die bekannte Anwendung von Säuren ermöglicht, die nunmehr aber nur noch in reduzierter Menge aufgegeben werden müssen, um die gleichen Vermahlungsergebnisse zu erzielen wie nach dem bekannten Verfahren. Auch kommt die Anwendung flüssiger oder gasförmiger nichtmineralischer Säuren in Frage, deren im Vergleich zu Mineralsäuren geringere Stärke durch die Dampfbehandlung kompensiert wird. Hierbei hat die Anwendung von Carbonsäuren den Vorteil, bei der Zelluloseveränderung keine zusätzlichen unerwünschten Stoffe in das Pulver einzubringen.

Die Vermahlung geschieht bei Temperaturen von über 100 °C leichter als bei Raumtemperatur. Daher sollte die Mahlung bei etwa derselben Temperatur wie die Dampfbehandlung erfolgen; hierbei kann die Erhitzungswärme zugleich auch für den Mahlvorgang genutzt werden.

In Versuchen hat es sich gezeigt, daß der Energieaufwand für das Verfahren der Zelluloseveränderung/Vermahlung bei einer Wärmebehandlung unter dem Druck von Sattdampf bei 110 °C bis 180 °C, insbesondere bei etwa 150 °C besonders niedrig ist. Die unerwünschte pyrolytische Zersetzung tritt bei der Temperatur von 150 °C praktisch noch nicht ein. Weiterhin hat es sich als zweckmäßig erwiesen, den Dampf nach der Behandlung schnell zu entspannen, um durch ein Aufreißen des Materials die Mahlung weiter vorzubereiten.

Für ein Ausführungsbeispiel zur Durchführung des erfindungsgemäßen Verfahrens wird vorsortierter Hausmüll eingesetzt, der von nicht flugfähigen Anteilen wie Metallen, Steinen, Holzstücken, Küchenabfällen vorher weitgehend befreit wurde.

- 3 -

Dieser vorsortierte Hausmüll gelangt in einen Schneckenreaktor, in dem er auf 150 °C erhitzt wird. Je nach Feuchte
des eingebrachten Materials wird Sattdampf hinzugegeben,
so daß ein Druck von etwa 5 bar im Schneckenreaktor erzeugt
wird. Im Schneckenreaktor wird das Material diesen Bedingungen während 15 - 20 min ausgesetzt.

Anschließend wird der Druck schlagartig entspannt, wobei die
Struktur des Materials aufgerissen wird. Das Material wird
dann in einer Mühle vermahlen und auf einem Sieb bei 0,5 mm
abgesiebt; das Unterkorn stellt den gewünschten Brennstoff
dar. Das Überkorn wird in die Drehtrommel zurückgeführt und
durchläuft die oben beschriebene Behandlung so lange, bis
die gewünschte Zerkleinerung erreicht ist.

Die bei der Entspannung freiwerdenden Brüden werden komprimiert und teils zur Sattdampferzeugung eingesetzt, teils zur
Vorwärmung des Materials verwendet, so daß Energieverbrauch
und Umweltprobleme minimiert werden.

Insgesamt ist mit dieser Anordnung eine umweltfreundliche
und energiesparende Herstellung schadstoffarmen pulverförmigen Brennstoffs zu erzielen, die die Nachteile bekannter
Verfahren vermeidet und mit technisch erprobten Aggregaten
kostengünstig zu realisieren ist.

Patentansprüche

1. Verfahren zur Herstellung eines Pulvers aus zellulosereichen Stoffen durch Erhitzen auf Temperaturen über 100 °C und Mahlen, dadurch gekennzeichnet, daß die Erhitzung in Gegenwart von Wasserdampf erfolgt.

2. Verfahren nach Anspruch 1, dadurch gekennzeichnet, daß die Erhitzung unter dem Druck von Sattdampf von 110 °C bis 180 °C erfolgt.

3. Verfahren nach Anspruch 2, dadurch gekennzeichnet, daß die Erhitzung unter dem Druck von Sattdampf von 150 °C erfolgt.

4. Verfahren nach Anspruch 2 oder 3, dadurch gekennzeichnet, daß der Dampf nach der Behandlung der zellulosereichen Stoffe schnell entspannt wird.

5. Verfahren nach einem der Ansprüche 1 bis 4, dadurch gekennzeichnet, daß die Vermahlung bei etwa derselben Temperatur wie die Behandlung mit Wasserdampf stattfindet.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | DE-A-2 513 767 (COMBUSTION EQUIPMENT) <br> * Ansprüche 1,19 * | | C 10 L 5/40 <br> B 02 C 19/18 |
| A,P | US-A-4 298 350 (OCCIDENTAL RESEARCH) <br> * Ansprüche 1-10 * | | |
| A | US-A-4 290 269 (HEDSTRÖM et al.) <br> * Ansprüche 1,3,5 * | | |
| A | FR-A- 972 779 (BERTIN et al.) <br><br> * Zusammenfassung 1-5 * | | |
| A | US-A-2 270 288 (GOSS) <br><br> * Anspruch 1 * | | |

| RECHERCHIERTE SACHGEBIETE (Int. Cl. ³) |
|---|
| C 10 C <br> B 02 C |

Der vorliegende Recherchenbericht wurde für alle Patentansprüche erstellt.

| Recherchenort | Abschlußdatum der Recherche | Prüfer |
|---|---|---|
| DEN HAAG | 21-01-1983 | MEERTENS J. |